# FASCICULE DE BREVET EUROPEEN

(11) **EP 1 609 234 B1**
(45) Date de publication et mention de la délivrance du brevet: **18.08.2010**
(21) Numéro de dépôt: 04742344.7
(22) Date de dépôt: 25.03.2004
(51) Int. Cl.: H02K 49/04

(54) **RALENTISSEUR ELECTROMAGNETIQUE D'UN VEHICULE**
ELEKTROMAGNETISCHE FAHRZEUGBREMSE
ELECTROMAGNETIC RETARDER FOR A VEHICLE

(30) Priorité: 31.03.2003 FR 0350080
(43) Date de publication de la demande: 28.12.2005
(73) Titulaire: Telma, 95310 Saint-Ouen L'Aumône (FR)
(72) Inventeur: LIU, Zeng, Gang, F-78780 Maurecourt (FR)
(74) Mandataire: Gamonal, Didier
(86) Numéro de dépôt international: PCT/FR2004/000736
(87) Numéro de publication internationale: WO 2004/091080

(56) Documents cités:
- FR-A- 2 744 679
- US-A- 5 044 228

## Description

### Domaine de l'invention

L'invention concerne un ralentisseur électromagnétique d'un véhicule. L'invention a pour but de faciliter le montage d'un tel ralentisseur sur un arbre de transmission du mouvement de rotation à au mois une roue du véhicule tout en augmentant les performances de ce même ralentisseur. L'invention est plus particulièrement destinée au domaine du camion, de l'autocar et de l'autobus, c'est-à-dire aux véhicules automobiles du type « poids lourds » mais peut également s'appliquer dans d'autres domaines.

### Etat de la technique

Un ralentisseur électromagnétique permet d'assister un dispositif de freinage d'un véhicule, notamment pour les véhicules du type "poids lourds". Un dispositif de freinage peut comporter des patins de frein destinés à se rapprocher contre au moins un disque d'un moyeu d'une roue d'un véhicule pour freiner le véhicule.

Grâce à l'intervention d'un ralentisseur électromagnétique, permettant de réduire la vitesse du véhicule, le dispositif de freinage est rendu plus endurant et plus sûr, notamment suite à une longue descente pour un véhicule de type poids lourd comme les camions ou les bus.

Il existe plusieurs types de ralentisseurs électromagnétiques. Notamment, il existe des ralentisseurs électromagnétiques de type axial et des ralentisseurs électromagnétiques de type Focal (marque déposée). Un ralentisseur électromagnétique de type axial est destiné à être placé sur un arbre de transmission entre un pont et une boîte de vitesse du véhicule. Dans ce cas, l'arbre de transmission est en deux parties pour montage entre celles-ci du ralentisseur. Un ralentisseur électromagnétique de type Focal est destiné à être placé directement sur un arbre de transmission à la sortie de la boîte de vitesse ou sur le pont du véhicule. Le pont d'un véhicule entraîne au moins un arbre de roue, lequel arbre de roue entraîne au moins une roue de ce même véhicule.

Un ralentisseur électromagnétique comporte au moins un stator inducteur et au moins un rotor induit avec présence d'un entrefer entre ces deux pièces. Le stator inducteur comporte par exemple un flasque. Le stator inducteur est destiné à porter à proximité et le long d'une périphérie, au moins une bobine. Une bobine est formée par un enroulement de fil de préférence en matière ferromagnétique, l'enroulement du fil s'effectuant autour d'un noyau. Chacun des noyaux, avantageusement en matériau ferromagnétique, de chacune des bobines se termine par un épanouissement polaire retenant la bobine au stator.

Le rotor induit est placé selon un plan parallèle à un plan du stator inducteur. Le rotor est destiné à tourner autour d'un axe du stator du fait de la transmission d'un mouvement de rotation au rotor par l'arbre de transmission du véhicule. Le rotor induit, avantageusement en matériau ferromagnétique, est prévu pour le passage des lignes du champ magnétique produit par les bobines portées par le stator lorsque celles-ci sont activées. Le stator pourrait cependant être un stator induit et le rotor un rotor inducteur. Le rotor porterait les bobines dans ce cas, comme décrit par exemple dans le document FR A 2 627 913, appelé ci-après D1.

Il est connu des ralentisseurs de type Focal comme décrit dans le document FR A 2 577 357, appelé ci-après D2, comportant un stator inducteur de part et d'autre duquel sont présents un premier rotor et un deuxième rotor. Pour permettre la fixation de l'arbre de transmission sur ce ralentisseur, le ralentisseur comporte un disque intercalaire ou plateau central. Ce disque intercalaire est habituellement destiné à relier le premier rotor au deuxième rotor d'une part, et à relier ce premier rotor et ce deuxième rotor à l'arbre de transmission d'autre part, de telle manière que l'arbre de transmission communique un mouvement de rotation à chacun des rotors du ralentisseur. Suite à ce mouvement de rotation, le premier rotor et le deuxième rotor sont destinés à tourner autour de l'axe du stator, lequel axe du stator se confond avec un axe du ralentisseur. Ainsi, lorsque les bobines sont excitées, le ralentisseur est amené à diminuer la vitesse de rotation de l'arbre de transmission par le freinage de la vitesse de rotation de chacun des rotors.

Le disque intercalaire décrit dans ce document D2 se présente sous la forme d'un anneau disposé avec un plan perpendiculaire à l'axe du servomoteur et situé avec un axe de cet anneau se confondant avec l'axe du ralentisseur. Le disque est situé à mi-distance entre le premier rotor et le deuxième rotor. Ce disque intercalaire est destiné à relier le premier rotor au deuxième rotor par l'intermédiaire d'une première bague et d'une deuxième bague respectivement. Dans ce type de ralentisseur, le premier rotor et le deuxième rotor sont chacun reliés par des bras coudés à la première bague et à la deuxième bague respectivement. Les deux bagues sont assemblées entre elles par des boulons ou goujons traversant des alésages formés dans les bagues. Le disque intercalaire ou plateau central est interposé entre les deux bagues permettant de définir un entrefer précis entre les rotors et le stator.

Or, certains autobus ont un arbre de transmission très court de sorte qu'il peut être difficile de fixer un tel arbre sur un ralentisseur de type Focal comme décrit précédemment. L'accès de l'arbre de transmission au disque intercalaire est d'autant plus difficile que l'arbre est court.

Pour faciliter le montage d'un tel arbre court, il est connu un autre type de ralentisseur électromagnétique ou ralentisseur de type FL, décrit plus particulièrement dans le document FR-A-2 744 679 (US A 5 487 481), comportant un tube intercalaire destiné également à relier le premier rotor au deuxième rotor. Ce tube intercalaire, de forme cylindrique circulaire creux, s'étend longitudinalement par rapport à l'axe du ralentisseur depuis le premier rotor jusqu'au deuxième rotor sur une plus grande distance que le disque intercalaire décrit dans D2. Ce tube vient ce fixer directement sur le premier rotor et sur le deuxième rotor. Ce tube intercalaire en forme de tube cylindrique circulaire autorise alors plus facilement la fixation de l'arbre de transmission sur une extrémité du tube intercalaire proche d'un rotor correspondant de telle sorte qu'il n'est pas nécessaire de placer l'arbre de transmission à un endroit situé à mi-distance entre le premier rotor et le deuxième rotor mais plutôt à un endroit proche soit du premier rotor, soit proche du deuxième rotor.

Comme visible à la figure 4 du document FR-A-2 744 679 le tube intercalaire présente des fentes en sorte qu'il est doté d'une certaine souplesse et peut donc subir de fortes contraintes thermiques. Un tel ralentisseur ne présente pas la rigidité d'un ralentisseur du type Focal, qui se prête mal au montage d'un arbre court. Il est donc nécessaire de rechercher un compromis.

### Objet de l'invention

Pour faciliter le montage de l'arbre de transmission relativement court sur un ralentisseur électromagnétique d'un véhicule tout en assurant une augmentation des performances de ce même ralentisseur, l'invention prévoit de fixer un disque sur un des rotors. Le disque est fixé sur un des rotors de manière à faciliter la fixation d'un arbre de transmission court tout en optimisant la tenue de la charge mécanique et de la charge thermique du ralentisseur. Le premier rotor et le deuxième rotor sont alors fixés entre eux par l'intermédiaire d'une rondelle centrale, permettant de régler un entrefer entre les deux rotors.

Le disque est positionné de telle manière qu'il est décalé longitudinalement par rapport à l'axe du ralentisseur vers un des deux rotors. Pour fixer le disque sur un des deux rotors, le disque comporte des moyens de fixation. Ces moyens de fixations sont avantageusement réalisés de telle manière qu'il n'est pas nécessaire de modifier les références de fabrication des rotors habituellement utilisés dans les ralentisseurs du type Focal. Ces moyens de fixations peuvent être par exemple des oreilles percées d'un orifice, lesquelles oreilles pouvant s'étendre à partir d'une périphérie externe du disque. Ces oreilles peuvent être destinées à être traversées par des organes de fixation.

Notamment, ces organes de fixation peuvent être des goujons habituellement utilisés pour relier la première bague et la deuxième bague ensembles, sachant que chaque bague est reliée au rotor concerné par des bras coudés et que les goujons sont implantés entre les bras venus de fonderie avec le rotor et la bague concernés. Ces goujons sont destinés à traverser des alésages creusés dans chacune des bagues et dans la rondelle centrale. Des écrous sont montés sur les extrémités des goujons pour serrage des bagues. Chacun des alésages de chacun de ces éléments est aligné les uns par rapport aux autres de telle manière qu'au moins un goujon puisse traverser le ralentisseur depuis la première bague jusqu'à la deuxième bague en passant par la rondelle centrale. Ainsi, dans l'invention, au moins un goujon peut être utilisé pour retenir le disque au premier rotor par exemple. Pour ce faire, le goujon est destiné à traverser l'oreille du disque tout en empruntant les alésages déjà existant dans la première bague, la rondelle centrale et la deuxième bague. Par conséquent, il n'est pas nécessaire de modifier les références de fonderie pour la fabrication de chacun de ces éléments. Le coût de fabrication d'un tel ralentisseur en est d'autant plus réduit. Le goujon peut posséder à chacune des ses extrémités un profil fileté pour y placer un écrou. De plus le goujon peut posséder un épaulement destiné à venir en appui sur l'une des faces de la rondelle centrale en étant logé dans l'épaisseur de la rondelle ou de la bague adjacente. Les écrous prennent appui respectivement sur l'une des bagues et sur le disque, le cas échéant avec interposition d'une rondelle d'appui et permettent une fixation des deux rotors. En variante, on utilise des boulons.

Ou bien ces organes de fixation peuvent être au moins une saillie s'étendant à partir d'une face d'une des bagues. Cette saillie est réalisée de telle manière qu'elle puisse être traversée par l'oreille selon l'invention. Comme pour le goujon, cette saillie peut être filetée à une extrémité distale de manière à y placer un écrou pour retenir le disque entre la première bague et l'écrou.

Les organes de fixation sont enfin disposés entre les bras du rotor correspondant.

L'invention a donc pour objet un ralentisseur électromagnétique d'un véhicule comportant
- au moins un stator inducteur destiné à porter au moins une bobine électromagnétique,
- un premier rotor induit et un deuxième rotor induit, lequel premier rotor et lequel deuxième rotor sont reliés entre eux par une rondelle centrale tout en étant chacun situés de part et d'autre d'un plan formé par le stator, et
- au moins un disque destiné à relier le premier rotor et le deuxième rotor à un arbre de transmission du véhicule, caractérisé en ce que
- le disque est fixé sur un des deux rotors de telle manière qu'il est positionné en décalage longitudinalement par rapport à un axe du ralentisseur vers ce même rotor.

### Brève description des dessins

L'invention sera mieux comprise à la lecture de la description qui suit et à l'examen des figures qui l'accompagnent. Celles-ci ne sont présentées qu'à titre indicatif est nullement limitatif de l'invention. Les figures montrent :
- Figures 1a à 1c : une première vue en coupe, une deuxième vue en coupe et une troisième vue en coupe d'un ralentisseur électromagnétique d'un véhicule, selon l'invention ;
- Figure 2 : une coupe longitudinale d'un ralentisseur électromagnétique d'un véhicule, selon l'invention.

### Description d'exemples de réalisation de l'invention

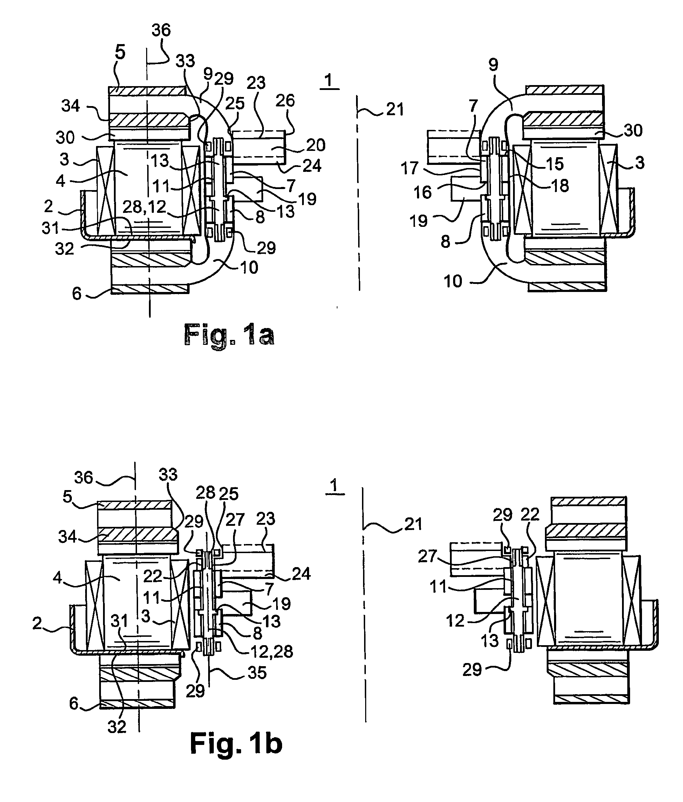

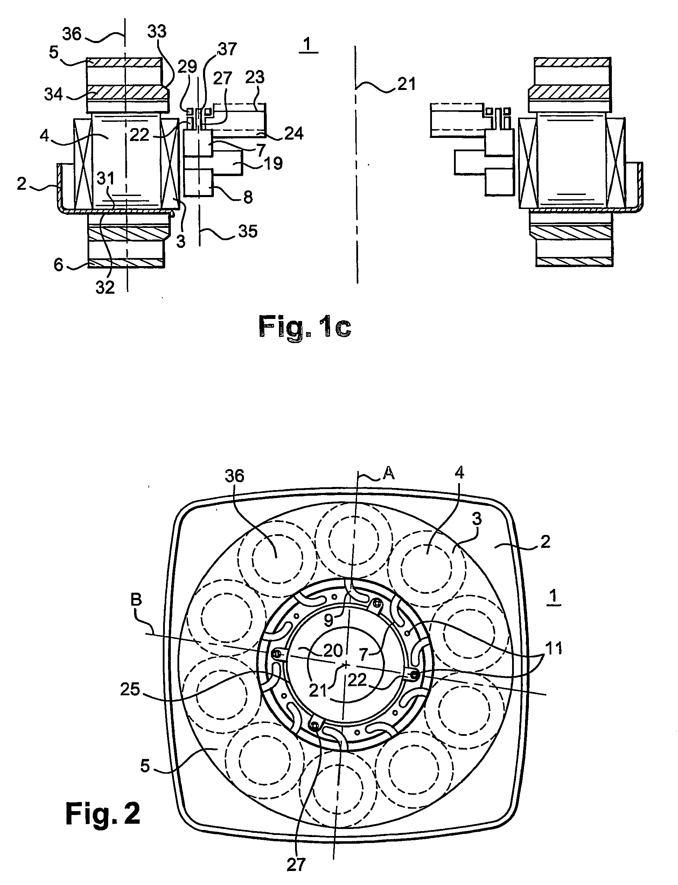

Les figures 1a et 1b illustrent un ralentisseur électromagnétique d'un véhicule selon l'invention comportant au moins un stator inducteur 2, un premier rotor induit 5, un deuxième rotor induit 6, et un disque 20. Plus particulièrement, les figures 1a et 1b représentent respectivement une coupe transversale du ralentisseur selon un axe A et selon un axe B passant par le ralentisseur représenté figure 2. Les rotors 5, 6 sont avantageusement en matériau ferromagnétique et il en est de même du flasque du stator 2.

Le ralentisseur électromagnétique de la figure 1a représente un ralentisseur de type Focal. Ce ralentisseur comporte un stator 2 sur lequel est fixée au moins une bobine 3. La bobine est formée par un enroulement de fil électromagnétique autour d'un noyau 4. Ce noyau 4, avantageusement en matière ferromagnétique, présente un axe 36 perpendiculaire à un plan formé par le stator. Ce noyau est terminé par un épanouissement polaire 30 en regard du rotor 5, lequel épanouissement tend à former un plan parallèle au plan formé par le stator, de manière à retenir la bobine au stator. Le stator 2, ici en forme de flasque mieux visible à la figure 2, est destiné à être relié au carter d'un pont ou d'une boîte de vitesses, le ralentisseur étant, de manière connue, monté en porte à faux à la sortie du pont ou de la boîte de vitesses.

Le ou les noyaux 4 sont fixés à l'une de leurs extrémités sur le flasque du stator 2 présentant à sa périphérie externe un rebord perpendiculaire de rigidification et des pattes (non visibles) pour sa fixation par exemple à une cloche solidaire du carter du ont arrière ou de la boîte de vitesse comme visible par exemple dans les documents US A 5 487 481 et US A 5 044 228.

Les noyaux présentent également un épanouissement (non référencés) au niveau du flasque du stator et ce en regard du rotor 6.

Les épanouissements 30 sont rapportés, par exemple par vissage, sur les noyaux.

La figure 2 représente une coupe longitudinale d'un ralentisseur électromagnétique. Dans l'exemple figure 2, le ralentisseur électromagnétique comporte dix bobines électromagnétiques disposées circulairement les unes à la suite des autres autour d'un axe 21 du ralentisseur, lequel axe 21 est parallèle à l'axe 36 de chacune des bobines. Mais ce ralentisseur électromagnétique pourrait en porter plus ou moins.

Le flasque du stator 2 est d'orientation transversale par rapport à l'axe 21.

Les bobines et les épanouissements sont recouverts par le premier rotor 5 et par le deuxième rotor 6 avec présence d'un entrefer, chacun des rotors, d'orientation transversale par rapport à l'axe 21, étant positionné l'un par rapport à l'autre selon un plan formé par le premier rotor 5 et selon un autre plan formé par le deuxième rotor 6 parallèles entre eux et parallèles au plan formé par le stator 2, figures 1a à 1c.

Un entrefer existe entre les épanouissements et le rotor 5, 6 associé.

Le plan du flasque du stator 2 délimite un premier côté 31 et un deuxième côté 32. Les bobines sont placées sur un des deux côtés du stator. Le premier côté 31 est destiné à faire face au premier rotor 5 et le deuxième côté 32 est destiné à être éloigné du premier rotor 5. Dans ce même exemple figures 1 a à 1 c, les bobines sont placées sur le premier côté 31 du stator.

Le premier rotor 5 et le deuxième rotor 6 sont fixés respectivement sur une première bague 7 et sur une deuxième bague 8, figures 1a et 1b. Les bagues 7 et 8 sont ici d'un seul tenant avec respectivement le premier rotor 5 et le deuxième rotor 6 ; les rotors avec leur bague associée étant réalisés par moulage. La première bague 7 et la deuxième bague 8 sont destinées à se faire face et à se fixer l'une sur l'autre par l'intermédiaire d'une rondelle centrale 19. La rondelle centrale 19 permet de définir un entrefer précis entre le stator 2 et chacun des rotors 5, 6. Pour ce faire, la rondelle 19 est d'épaisseur réduite à sa périphérie externe pour définir l'entrefer entre les rotors et le stator.

Le ralentisseur électromagnétique comporte également un disque 20 destiné à relier le premier rotor 5 et le deuxième rotor 6 à un arbre de transmission du mouvement de rotation ici à au moins une roue du véhicule (non représenté). Plus précisément, une partie du joint de cardan associé à l'extrémité concernée de l'arbre de transmission se fixe sur le disque et il en est de même de l'arbre associé à la boîte de vitesses ou au pont.

Le disque 20 présente par exemple des trous pour le passage d'organes de fixation, tels que des vis, pour sa fixation sur la fourche du joint de cardan lié en rotation à l'arbre d'entrée du pont arrière ou à l'arbre de sortie de la boite de vitesse comme visible à la figure 1 du document FR A 2 744 679. Le disque 20 présente donc une zone de fixation au joint de cardan et est relié ici via ce joint de cardan à l'arbre de transmission.

L'arbre de transmission permet ainsi d'entraîner un mouvement de rotation du premier rotor 5 et du deuxième rotor 6 autour de l'axe 21 du ralentisseur et par rapport au stator 2. Après excitation des bobines, il se forme un champ magnétique dans chacun des rotors 5 et 6. Ce champ magnétique a tendance à s'opposer au mouvement de rotation des rotors. Ce champ magnétique entraîne alors un ralentissement de la vitesse de rotation des rotors 5 et 6, voir un arrêt de la rotation de ces rotors 5 et 6 et de l'arbre de transmission.

Selon l'invention, le disque 20 est disposé de telle manière qu'il est positionné en décalage longitudinalement par rapport l'axe 21 du ralentisseur vers un des deux rotors. Plus particulièrement, le disque 20 est positionné sur une des bagues 7 ou 8 correspondante au rotor 5 ou 6, selon les applications.

Ainsi, le disque est dans un mode de réalisation positionné sur la bague la plus proche du carter du pont ou de la boîte de vitesses en sorte que l'arbre de transmission peut être court et que l'encombrement axial est réduit. En variante, le disque est positionné sur l'autre bague, l'arbre de transmission étant raccourci. Dans ce cas on peut fixer le disque sur la fourche du joint de cardan appartenant à l'extrémité de l'arbre de transmission. Le disque relie dans tous les cas, de manière directe ou indirecte, les rotors 5, 6 à l'arbre de transmission.

Dans l'exemple figures 1 a à 1 c, le disque 20 est positionné sur la première bague 7 correspondant au premier rotor 5. Ainsi, dans ce même exemple, le disque 20 est positionné en regard d'une périphérie interne telle que 17 délimitée par chacune des bagues 7 et 8 de manière décrite ci-après. Chacune des bagues 7 et 8 délimite une périphérie interne telle que 17 et une périphérie externe telle que 18. Chacune de ces périphéries 17 et 18 forme une face avec un plan parallèle à l'axe 21 du ralentisseur. La périphérie interne 17 de chacune des bagues 7, 8 est destinée à être proche de l'axe 21 du ralentisseur et la périphérie externe 18 de chacune des bagues 7, 8 est destinée à être éloignée de l'axe 21 du ralentisseur.

Le disque délimite aussi une périphérie externe 25 et une périphérie interne 26. La périphérie externe 25 du disque est destinée à être éloignée de l'axe 21 du ralentisseur. La périphérie interne 26 du disque est destinée à être proche de ce même axe 21. La périphérie externe 25 du disque 20 peut délimiter un diamètre inférieur à un diamètre délimité par la périphérie interne 17 de la bague correspondante de telle manière que la périphérie externe 25 du disque 20 est placée en regard de la périphérie interne 17 de la bague 7 ou 8.

Le disque 20 est fixé sur une des bagues 7 ou 8 par au moins un moyen de fixation 22, figures 1b et 2. La figure 1 a représente une coupe transversale du ralentisseur passant en dehors du moyen de fixation 22 et la figures 1b représente une coupe transversale du même ralentisseur passant par le moyen de fixation 22, selon l'invention.

Ce moyen de fixation 22 peut former une oreille 22 radialement saillante. Une oreille 22 peut être formée par une extension de la matière à partir de la périphérie externe 25 du disque 20, figures 1b à 1c. L'oreille 22 peut s'étendre à partir de la périphérie externe 25 du disque 20 radialement par rapport à l'axe 21 et en direction opposée à l'axe 21 du ralentisseur. L'oreille 22 est percée d'un orifice central 27. Dans un exemple figure 2, le disque comporte quatre oreilles. Mais le disque pourrait en comporter plus comme par exemple huit oreilles pour assurer une meilleure fixation du disque au rotor correspondant.

Dans l'exemple figures 1b, les oreilles 22 s'insèrent sur une face supérieure 15 de la première bague 7. Chacune des bagues 7 et 8 comporte par rapport à un plan perpendiculaire à l'axe 21 du ralentisseur une face supérieure telle que 15 et une face inférieure telle que 16. La face supérieure 15 de chacune des bagues est destinée à être éloignées de la rondelle centrale 19. La face inférieure 16 de chacune des bagues est destinée à être en regard de la rondelle centrale 19. Ces oreilles 22 peuvent s'étendre à partir de la périphérie externe 25 du disque 20 à mi-distance entre une face supérieure 23 et une face inférieure 24 de ce même disque 20. Plus précisément, le disque délimite également une face supérieure 23 et une face inférieure 24, la face supérieure 23 étant destinée à être éloignée de la rondelle centrale 19 et la face inférieure 24 étant destinée à être proche de cette rondelle centrale 19. Ou bien, ces oreilles 22 peuvent s'étendre à partir d'un endroit de la périphérie externe 25 proche de la face supérieure 23 du disque 20 ou à un endroit de la périphérie externe 25 proche de la face inférieure 24 du disque 20. Les figures 1b et 1c permettent de visualiser en traits pointillés la position du disque 20 par rapport à la bague dans le cas où les oreilles seraient positionnées à un endroit de la périphérie externe 25 du disque proche de la face inférieure 24 du disque 20.

En fonction de la position des oreilles 22 sur la périphérie externe 25 du disque 20 par rapport à la face supérieure 23 et par rapport à la face inférieure 24, les oreilles 22 permettent au disque 20 d'être en appui de centrage ou non par sa périphérie externe 25 contre la périphérie interne 17 de la première bague 7. Le disque 20 peut être en appui sur une surface plus ou moins grande en fonction de l'endroit de la périphérie externe 25 du disque 20 à partir duquel s'étend l'oreille 22, comme représenté en traits pointillés sur les figures 1a à 1c. Cette surface d'appui plus ou moins grande permet au disque 20 de s'emboîter éventuellement au moins partiellement dans la première bague 7 de manière à augmenter une tenue mécanique d'un tel ralentisseur en augmentant la stabilité d'un tel ralentisseur.

Les oreilles 22 peuvent être percées d'un orifice 27 selon un axe 35 parallèle à l'axe 21 du ralentisseur, figures 1b, 1c, 2. Cet orifice 27 est réalisé de telle manière qu'un organe de fixation 28 est susceptible de le traverser. Un organe de fixation peut être au moins un goujon tel que 12 comme celui habituellement utilisé pour fixer la première bague à la deuxième bague en passant par, la rondelle 19, figures 1 a et 1 b. Ce goujon 12 est destiné à traverser ces différentes pièces en empruntant des alésages 11, les alésages étant alignés les uns par rapport aux autres et étant réalisés dans une épaisseur de la première bague, de la deuxième bague et de la rondelle centrale 19, figure 1a. En utilisant de tels alésages dans l'invention, il n'est pas nécessaire de changer de références de fonderie pour fabriquer un tel ralentisseur. Dans l'invention, on se serre de ces ouvertures formées par les alésages pour fixer le disque 20, les deux bagues 7, 8 et la rondelle 19 ensembles, comme représenté figure 1 b. Les rotors ne sont pas modifiés.

Le ralentisseur comporte au moins un nombre d'alésages par éléments formant le ralentisseur suffisant pour fixer les oreilles. On entend par éléments formant le ralentisseur, la première bague, la deuxième bague et la rondelle centrale. De préférence, le ralentisseur comporte un nombre d'alésage par éléments le formant égal à quatre de telle manière que quatre oreilles formées par le disque selon l'invention puissent se fixer sur une bague correspondante.

Le goujon 12 comporte un épaulement 13 prenant appui contre l'une des faces de la rondelle centrale 19 et de part et d'autre de cet épaulement 13 deux parties lisses prolongées par chacune par une partie filetée de fixation pour un écrou de fixation 29. Ici, l'épaulement 13 est intercalé entre la bague 8 et la rondelle 19. Pour ce faire, l'alésage de la bague 8 présente un changement de diamètre pour logement de l'épaulement 13. En variante, c'est la rondelle 19 qui présente ce changement de diamètre. Dans tous les cas, on peut interposer une rondelle de faible épaisseur entre la rondelle 19 et la bague 8 pour régler de manière précise l'entrefer entre le stator et les rotors.

En variante, l'organe de fixation consiste en une vis dont la tête prend appui sur l'oreille 22. Cette vis traverse l'oreille concernée ainsi que la bague 7 et la rondelle 19, sa partie filetée se vissant dans la bague 8 qui présente alors un taraudage.

En variante, la vis est remplacée par un boulon.

En variante, l'organe de fixation peut également former une saillie 37, comme représentée sur la figure 1c. Cette saillie 37 est réalisée de telle manière qu'elle est susceptible de traverser l'oreille 22 également en passant par l'orifice 27 de cette même oreille. En effet, la première bague 7 peut être munie d'au moins une saillie 37 destinée à s'insérer dans l'orifice 27. Au moins une saillie 37 peut être formée à partir de la face supérieure 15 de cette même première bague 7. De préférence, cette saillie 37 s'étend perpendiculairement par rapport au plan formé par cette face supérieure 15, figure 1 c. La saillie 37 pourrait également s'étendre à partir de la périphérie interne 17 de la première bague 7 d'abord perpendiculairement par rapport à l'axe du ralentisseur puis longitudinalement par rapport à ce même axe du ralentisseur.

La saillie 37 peut être filetée au moins à une extrémité distale de telle manière qu'il est possible de visser cette saillie 37 à l'aide d'un écrou 29.

La saillie 37 consiste par exemple en une vis dont la tête est noyée dans la bague 7 par la technique de surmoulage. Les saillies 37 sont alors décalées circonférentiellement par rapport aux goujons 12 et sont implantées entre les bras, décrits ci-après, du rotor concerné. On notera que la géométrie des rotors n'est pas modifiée.

Pour monter le disque 20 sur la bague correspondante, il suffit alors de positionner le disque 20 avec chacune des oreilles 22 placées en regard de chacun des organes de fixation 28, 12, 37 à un endroit proche d'une des bagues, puis de faire traverser ces organes de fixation 28, 12, 37 à travers l'orifice 27 des oreilles 22, puis de visser les organes de fixation 28, 12, 37 à l'aide d'un écrou 29 de manière à retenir le disque 20 sur la bague correspondante.

Pour se fixer sur la première bague 7, ces oreilles 22 sont réalisées à partir de la périphérie externe 25 du disque 20 de telle manière qu'au moins une oreille 22 est destinée à s'interposer entre des bras coudés 9, 10 du rotor 5, 6, figure 2.

En effet, le premier rotor 5 et le deuxième rotor 6 sont reliés sur la première bague 7 et sur la deuxième bague 8 respectivement par l'intermédiaire d'au moins un bras coudé 9, 10. Le premier rotor 5 et le deuxième rotor 6 avec leur bras 9 et 10 respectivement sont d'un seul tenant avec les bagues 7 et 8 respectivement. Un bras coudé est formé par une extension de la matière formée par le rotor et qui a tendance à s'incliner vers le stator par rapport à un plan formé par le rotor. Le bras coudé de chacun des rotors a tendance à s'étendre radialement en direction de l'axe 21 du ralentisseur tout en tendant à s'incliner vers le stator à partir d'une périphérie interne 33 de chacun des rotors.

Chacun des rotors 5, 6 comporte un anneau présentant une périphérie interne telle que 33 et une périphérie externe telle que 34. La périphérie interne 33 de chacun des rotors 5, 6 est une face destinée à être proche de l'axe 21 du ralentisseur. La périphérie externe 34 de chacun des anneaux des rotors est une face destinée à être éloignée de l'axe 21 de ce même ralentisseur. Chaque anneau de rotor présente, du côté opposé au stator, des ailettes dont certaines au moins sont prolongées par les bras. Ces ailettes sont solidaires d'une jante (non référencée) parallèle à l'anneau du rotor pour formation d'un ventilateur permettant de refroidir le ralentisseur. Suivant une caractéristique de l'invention les oreilles et les organes de fixation sont implantés entre les bras ce qui permet d'obtenir un montage rapide et aisé. On tire partie de la place disponible entre les bras tout en pouvant utiliser de manière avantageuse des rotors standards du type de ceux décrits dans le document D2. Bien entendu les moyens de fixations 22, en forme d'oreilles dans les figures, peuvent avoir une autre forme. Par exemple ils peuvent consister en des pattes radialement saillantes.

Ces moyens de fixations peuvent être rapportés, par exemple par soudage, sur le disque. Dans tous les cas ils sont solidaires du disque.

Le disque n'est pas forcément de forme plate. Ainsi le disque peut présenter une portion inclinée entre les moyens de fixation 22, tels que des oreilles, et sa zone de fixation précitée au joint de cardan.

Chaque rotor à ailettes, chaque bras et chaque bague sont obtenus ici par moulage. Dans l'exemple préféré figure 2, le premier rotor 5 comporte dix bras tels que 9. Chacun de ces bras 9 est destiné à s'étendre à partir de la périphérie interne 33 de l'anneau du premier rotor radialement et en direction de l'axe 21 du ralentisseur pour se fixer sur la première bague 7. Il en est de même pour le deuxième rotor 6. Dans l'exemple figures 1 a et 1 b, chacun des bras 9, 10 de chacun des rotors 5, 6 se fixe sur la face supérieure 15 de la bague 7, 8 correspondante.

On appréciera que la solution est simple et économique par rapport à la solution décrite dans le document US A 5 044 228. En effet la rondelle centrale 19 à uniquement une fonction d'entretoise entre les deux bagues 7, 8 et de centrage des rotors. Cette rondelle 19 est plus simple et économique que l'insert tubulaire à anneau décrit dans le document précité et mieux visible à la figure 2 de celui-ci. En outre cette rondelle est moins sollicité mécaniquement ce qui est favorable pour l'obtention d'un entrefer précis, réglé de manière avantageuse à l'aide d'au moins une rondelle de faible épaisseur, entre les épanouissements du stator et les rotors 5, 6 d'orientation transversale par rapport à l'axe 21.On obtient également un bon centrage des rotors.

Par rapport au document FR A 2 744 679 on obtient également un entrefer précis, un bon centrage des rotors et une plus grande rigidité.

Dans l'exemple de réalisation décrit l'arbre de transmission intervient entre la boîte de vitesse et le pont arrière permettant d'entraîner les roues arrières du véhicule. En variante cet arbre de transmission intervient entre la boîte de vitesse et une roue avant du véhicule.
Cet arbre de transmission peut être court.
L'invention s'applique également aux véhicules à quatre roues motrices.

## Revendications

1. - Ralentisseur électromagnétique (1) d'un véhicule comportant
- au moins un stator inducteur (2) destiné à porter au moins une bobine (3) électromagnétique,
- un premier rotor induit (5) et un deuxième rotor induit (6), lequel premier rotor et lequel deuxième rotor sont reliés entre eux par une rondelle centrale (19) tout en étant chacun situés de part et d'autre d'un plan formé par le stator (2), et
- au moins un disque (20) destiné à relier le premier rotor et le deuxième rotor à un arbre de transmission du véhicule, **caractérisé en ce que**
- le disque est fixé sur un des deux rotors de telle manière qu'il est positionné en décalage longitudinalement par rapport à un axe (21) du ralentisseur vers ce même rotor.

2. - Ralentisseur selon la revendication 1 **caractérisé en ce que**
- le premier rotor et le deuxième rotor sont fixés à une première bague (7) et à une deuxième bague (8) respectivement, lesquelles première bague et deuxième bague sont reliées entre elles par la rondelle centrale (19),
- le disque (20) se fixe sur une des bagues par l'intermédiaire de moyens de fixation (22).

3. - Ralentisseur selon la revendication 2 **caractérisé en ce que** les moyens de fixation forment au moins une oreille percée.

4. - Ralentisseur selon la revendication 3 **caractérisé en ce que** le ralentisseur comporte quatre oreilles.

5. - Ralentisseur selon la revendication 3 ou 4, **caractérisé en ce que** l'oreille est percée centralement.

6. - Ralentisseur selon l'une des revendications 2 à 5, **caractérisé en ce que**
- le disque comporte une périphérie externe (25) éloignée d'un axe (21) du ralentisseur et une périphérie interne (26) proche de l'axe du ralentisseur, et
- au moins un moyen de fixation s'étend radialement à partir de la périphérie externe de ce même disque.

7. - Ralentisseur selon l'une des revendications 2 à 6, **caractérisé en ce que**
- le premier rotor et le deuxième rotor sont reliés à la première bague et à la deuxième bague par l'intermédiaire de bras (9, 10),
- au moins un moyen de fixation (22) est interposé entre les bras d'un des rotors.

8. - Ralentisseur selon l'une des revendications 2 à 7 **caractérisé en ce que** la bague sur laquelle est destiné à se fixer le disque est munie d'au moins une saillie (37) destinée à recevoir en correspondance le moyen de fixation.

## Claims

1. Electromagnetic retarder (1) of a vehicle, comprising:
- at least one inducing stator (2) which is designed to support at least one electromagnetic coil (3);
- a first induced rotor (5) and a second induced rotor (6), which first rotor and second rotor are connected to one another by a central washer (19), whilst being situated, one on one side and one on the other side, of a plane formed by the stator (2); and
- at least one disc (20), which is designed to connect the first rotor and the second rotor to a drive shaft of the vehicle, **characterised in that**:
- the disc is secured to one of the two rotors such that it is positioned longitudinally offset relative to an axis (21) of the retarder, towards this same rotor.

2. Retarder according to claim 1, **characterised in that** :
- the first rotor and the second rotor are secured to a first ring (7) and to a second ring (8) respectively, and the said first ring and second ring are connected to one another by means of the central washer (19); and
- the disc (20) is secured to one of the rings by means of securing means (22).

3. Retarder according to claim 2, **characterised in that** the securing means form at least one perforated lug.

4. Retarder according to claim 3, **characterised in that** the retarder comprises four lugs.

5. Retarder according to claim 3 or 4, **characterised in that** the lug is perforated centrally.

6. Retarder according to one of claims 2 to 5, **characterised in that**:
- the disc comprises an outer periphery (25) which is spaced from an axis (21) of the retarder, and an inner periphery (26) which is close to the axis of the retarder; and
- at least one securing means extends radially from the outer periphery of this same disc.

7. Retarder according to one of claims 2 to 6, **characterised in that**:
- the first rotor and the second rotor are connected to the first ring and to the second ring by means of arms (9, 10); and
- at least one securing means (22) is interposed between the arms of one of the rotors.

8. Retarder according to one of claims 2 to 7, **characterised in that** the ring on which the disc is designed to be secured is provided with at least one projection (37) which is designed to receive in correspondence the securing means.

## Patentansprüche

1. Elektromagnetischer Retarder (1) für ein Fahrzeug, der
- mindestens einen induzierenden Stator (2), der mindestens eine elektromagnetische Spule (3) trägt,
- einen ersten induzierten Rotor (5) und einen zweiten induzierten Rotor (6), wobei der erste Rotor und der zweite Rotor durch eine mittlere Scheibe (19) miteinander verbunden sind und beidseitig einer Ebene angeordnet sind, die durch den Stator (2) gebildet wird, und
- mindestens eine Scheibe (20) umfasst, über die der erste Rotor und der zweite Rotor mit einer Transmissionswelle des Fahrzeugs verbunden werden, **dadurch gekennzeichnet, dass**
- die Scheibe so an einem der beiden Rotoren befestigt ist, dass sie bezogen auf eine Achse (21) des Retarders in Längsrichtung zu diesem Rotor versetzt ist.

2. Retarder nach Anspruch 1, **dadurch gekennzeichnet, dass**
- der erste Rotor und der zweite Rotor an einem ersten Ring (7) beziehungsweise an einem zweiten Ring (8) befestigt sind, wobei der erste Ring und der zweite Ring durch eine mittlere Scheibe (19) miteinander verbunden sind,
- die Scheibe (20) mit Befestigungsmitteln (22) an einem der Ringe befestigt wird.

3. Retarder nach Anspruch 2, **dadurch gekennzeichnet, dass** die Befestigungsmittel mindestens eine gelochte Öse bilden.

4. Retarder nach Anspruch 3, **dadurch gekennzeichnet, dass** der Retarder vier Ösen umfasst.

5. Retarder nach Anspruch 3 oder 4, **dadurch gekennzeichnet, dass** die Öse mittig gelocht ist.

6. Retarder nach einem der Ansprüche 2 bis 5, **dadurch gekennzeichnet, dass**
- die Scheibe einen Außenumfang (25) aufweist, der von einer Achse (21) des Retarders entfernt ist, und einen Innenumfang (26), der nahe an der Achse des Retarders liegt, und
- sich mindestens ein Befestigungsmittel radial vom Außenumfang der besagten Scheibe erstreckt.

7. Retarder nach Anspruch 2 bis 6, **dadurch gekennzeichnet, dass**
- der erste Rotor und der zweite Rotor mittels Armen (9, 10) mit dem ersten Ring und mit dem zweiten Ring verbunden sind,
- mindestens ein Befestigungsmittel (22) zwischen den Armen eines der Rotoren angeordnet ist.

8. Retarder nach einem der Ansprüche 2 bis 7, **dadurch gekennzeichnet, dass** der Ring, auf dem die Scheibe befestigt wird, mindestens eine Auskragung (37) zur Aufnahme des entsprechenden Befestigungsmittels aufweist.
